# EUROPEAN PATENT SPECIFICATION

(11) **EP 3 197 645 B1**
(45) Date of publication and mention of the grant of the patent: **26.05.2021**
(21) Application number: 14771891.0
(22) Date of filing: 23.09.2014
(51) Int. Cl.: B25J 9/16

(54) **SAFETY FUNCTION VISUALIZATION OF AN INDUSTRIAL ROBOT**
SICHERHEITSFUNKTIONSVISUALISIERUNG EINES INDUSTRIEROBOTERS
VISUALISATION DE FONCTIONS DE SÉCURITÉ D'UN ROBOT INDUSTRIEL

(43) Date of publication of application: 02.08.2017
(73) Proprietor: ABB Schweiz AG, 5400 Baden (CH)
(72) Inventor: BERLIN, Henrik, S-438 35 Landvetter (SE); KRYSELL, Henrik, S-446 33 Älvängen (SE)
(74) Representative: Kransell & Wennborg KB
(86) International application number: PCT/EP2014/070187
(87) International publication number: WO 2016/045694

(56) References cited:
- WO-A1-2014/088994
- US-A- 4 979 128
- ILHAN INCE ET AL: "VIRTUALITY AND REALITY: A VIDEO/GRAPHICS ENVIRONMENT FOR TELEOPERATION", DECISION AIDING FOR COMPLEX SYSTEMS. CHARLOTTESVILLE, VA., OCT. 13 - 16, 1991; [PROCEEDINGS OF THE INTERNATIONAL CONFERENCE ON SYSTEMS, MAN AND CYBERNETICS], NEW YORK, IEEE, US, vol. 2, 13 October 1991 (1991-10-13), pages 1083-1089, XP000238075, ISBN: 978-0-7803-0233-4

## Description

### TECHNICAL FIELD

The present invention relates to industrial robots, and especially to a method for visualizing safety functions defined by an end user of the robot.

### BACKGROUND ART

For disclosing the present invention and its background art it is important to define what is understood by the concept of safety function. In the context of this disclosure a safety function means any definition defined by an end user of an industrial robot affecting the functionality of the robot, which definition is applicable within a well-defined geometric range. Particularly, any constraint defined by the robot manufacturer that the end user is not supposed to change shall not be considered as a safety function in the context of this disclosure.

Typically a safety function is a limitation. For example, an operator (end user) of a robot may limit a work area of the robot to be smaller than the maximal work area defined by the robot manufacturer. In such case a parameter relevant for the safety function is a position of a robot tool, and the safety function comprises boundary values for the position and a definition that the robot tool shall keep either inside or outside of the given boundary values. The geometric range within which the safety function is applicable is defined by the same boundary values. Another typical example where a safety function is applied is a speed limit for a robot tool within a restricted volume. In such case a parameter relevant for the safety function is the speed of the robot tool for which the safety function comprises a boundary value (an upper limit). To achieve the desired functionality the operator needs to define not only the boundary value but also the geometric range, in this case the volume, within which (or outside of which) the speed limit is applicable.

WO 2014/088994 A1 shows a two way real-time communication link connecting a machine location with a control station. An interface at the control station allows an operator to select one or more virtual constraints on operation of the machine when the machine is performing a predetermined function.

It is conventionally known to define safety functions for industrial robots. However, after that safety functions are defined it may be difficult for the operator to get an overview of the active safety functions and of the geometric ranges within which they are applicable. There therefore remains a desire to increase the operator's awareness of safety functions present in an industrial robot.

### SUMMARY OF THE INVENTION

One object of the invention is to provide an improved method for visualizing safety functions of an industrial robot, which methods allows an operator of the robot to use his or her vision for creating a mental picture of geometric ranges within which (or outside of which) the safety functions are applicable.

These objects are achieved by the method according to appended claim 1 and by the device according to appended claim 11.

The invention is based on the realization that the operator's awareness of safety functions present in an industrial robot is effectively increased by visibly illustrating geometric ranges within which (or outside of which) the safety functions are applicable.

According to a first aspect of the invention, there is provided a method for visualizing safety functions of an industrial robot. The method comprises the steps of: defining at least one geometric range; defining for each of the at least one geometric range at least one safety function applicable within the geometric range; and visibly illustrating each of the at least one geometric range to thereby provide at least one geometric range image. By visibly illustrating geometric ranges within which (or outside of which) safety functions are applicable, an operator's awareness of the safety functions present in an industrial robot is effectively increased.

According to one embodiment of the invention, the method further comprises the step of visibly illustrating at each of the at least one geometric range image at least one safety function applicable within the respective geometric range. By visibly illustrating a safety function at a geometric range image it becomes intuitive for the operator that the respective safety function is applicable within the respective geometric range.

According to one embodiment of the invention, the geometric range comprises at least one of the following: a line, a curve, an area, a surface, a volume, an angular interval.

According to one embodiment of the invention, the geometric range is different from the maximal work area of the robot.

According to one embodiment of the invention, the at least one safety function comprises a boundary value of a parameter.

According to one embodiment of the invention, the method further comprises the step of visibly illustrating the boundary value. By visibly illustrating a boundary value of a parameter it becomes intuitive for the operator to what degree operation of the robot is limited.

According to one embodiment of the invention, the parameter is one of the following: axis position, axis speed, tool position, tool speed.

According to one embodiment of the invention, the method further comprises the step of providing the at least one geometric range image with at least one visible characteristic. By providing a geometric range image with a visible characteristic it becomes intuitive for the operator to perceive the borders of the respective geometric range, and it becomes possible to intuitively provide the operator with further information, such as a type and a status, about the respective safety function.

According to one embodiment of the invention, the method further comprises the steps of: defining a plurality of geometric ranges; visibly illustrating each of the plurality of geometric ranges to thereby provide a plurality of geometric range images; and providing each of the plurality of geometric range images with at least one visible characteristic different from the visible characteristics of the remaining geometric range images. By providing geometric range images with different visible characteristics it becomes intuitive for the operator to perceive the borders of the respective geometric ranges.

According to one embodiment of the invention, the method further comprises the step of changing the at least one visible characteristic in dependence of a status of the robot. By changing a visible characteristic in dependence of a status of the robot it becomes intuitive for the operator to perceive the status of the robot.

According to one embodiment of the invention, the visible characteristic is a color.

According to a second aspect of the invention, there is provided a robot system comprising an industrial robot, a robot controller configured to control the movements of the robot, a programming environment allowing an operator to define geometric ranges and safety functions applicable within the geometric ranges, and a display. The robot controller comprises a computer program configured to instruct the display to visibly illustrate each of the at least one geometric range to thereby provide at least one geometric range image. By visibly illustrating geometric ranges within which (or outside of which) safety functions are applicable, the operator's awareness of the safety functions present in an industrial robot is effectively increased.

### BRIEF DESCRIPTION OF THE DRAWINGS

The invention will be explained in greater detail with reference to the accompanying drawings, wherein
- figure 1: shows a visualization resulting from a method according to one embodiment of the invention,
- figure 2: shows a visualization resulting from a method according to one embodiment of the invention,
- figure 3: shows a visualization resulting from a method according to one embodiment of the invention, and
- figure 4: schematically shows a robot controller and a robot.

### DESCRIPTION OF PREFERRED EMBODIMENTS

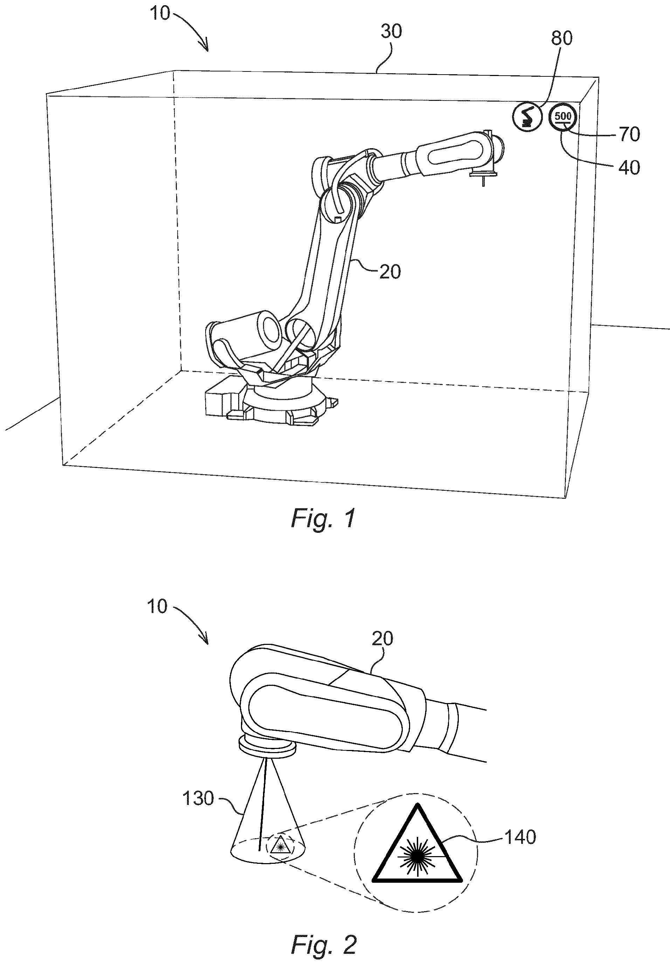

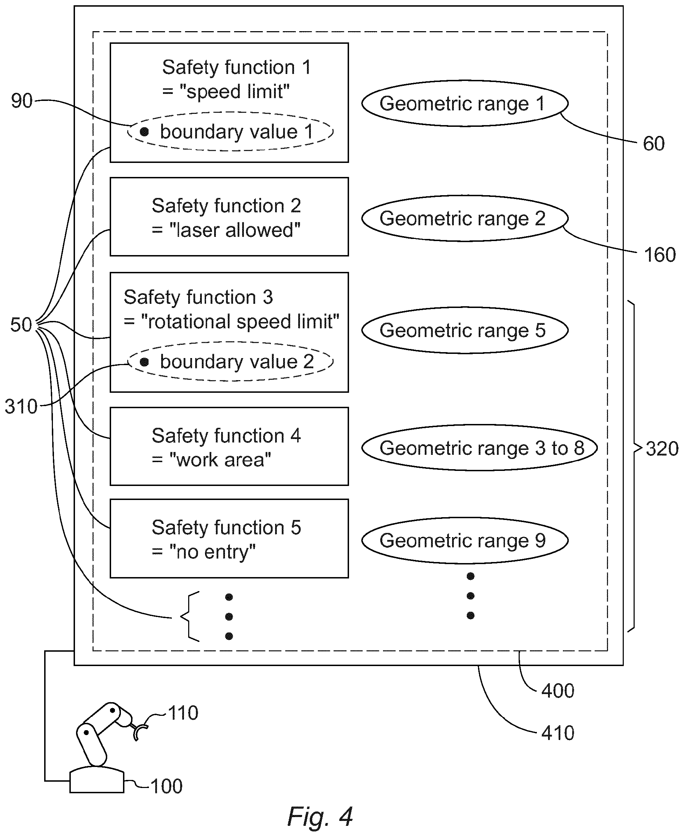

Referring to figure 1, a visualization 10 of a safety function 50 (see figure 4) present in an industrial robot 100 (see figure 4) comprises a robot image 20 and a first geometric range image 30, the robot image 20 representing the robot 100 to be operated and the first geometric range image 30 being a visible illustration of a respective first geometric range 60 (see figure 4) defined by an operator of the robot 100. In the present example the first geometric range 60 is a cuboid, and the first geometric range image 30 has yellow edges and translucent yellow surfaces. At the first geometric range image 30 there is a first sign 40 which is a visible illustration of a safety function 50 "speed limit" applicable within the first geometric range 60, the preposition "at" in this context implying that it is clear for the observer of the visualization 10 that the first sign 40 is associated with the first geometric range image 30.

The first sign 40 is a prohibitory one characterized by a circular shape with a white background and a red rim. More particularly, the first sign 40 is a speed limit sign. The type of the first sign 40 may already be obvious to the operator from frequently used traffic signs or from other frequently used symbols. In any case, the first sign 40 is such that an experienced operator is able to readily associate the type of the first sign 40 with the type of a respective safety function 50. In the present example the circle with the white background and the red rim communicates to the operator that the first geometric range 60 comprises a speed limit for a robot tool 110. The first sign 40 further comprises a first limit number 70 which is a visible illustration of a first boundary value 90 (see figure 4) defined by the operator for the respective safety function 50. In the present example the first boundary value 90 is 500 mm/s.

At the first geometric range image 30 there is furthermore a second sign 80 which is a visible illustration of a "tool presence" monitoring also applicable within the first geometric range 60. The "tool presence" monitoring is not a safety function 50 since its purpose is purely informative and it does not affect the functionality of the robot 100. The second sign 80 is an informative one characterized by a circular shape with a blue background. In the present example the circle with the blue background provided with a robot silhouette communicates to the operator that the respective robot tool 110 is currently within the first geometric range 60.

Referring to figure 2, a visualization 10 of a safety function 50 (see figure 4) present in an industrial robot 100 (see figure 4) comprises a robot image 20 and a second geometric range image 130. In the present example a respective second geometric range 160 (see figure 4) is a cone, and the second geometric range image 130 has blue edges and translucent blue surfaces. At the second geometric range image 130 there is a third sign 140 which is a visible illustration of a safety function 50 "laser allowed" applicable within the second geometric range 160. The third sign 140 is a warning sign characterized by a triangular shape with a yellow background and a black perimeter. In the present example the triangle with the yellow background and the black perimeter provided with a symbol of a laser communicates to the operator that within the second geometric range 160 use of laser is allowed. The tip of the cone is at the TCP and the orientation of the same always remains downwards, which in practice prohibits the laser from shooting around while a full rotation of the last robot axis is allowed.

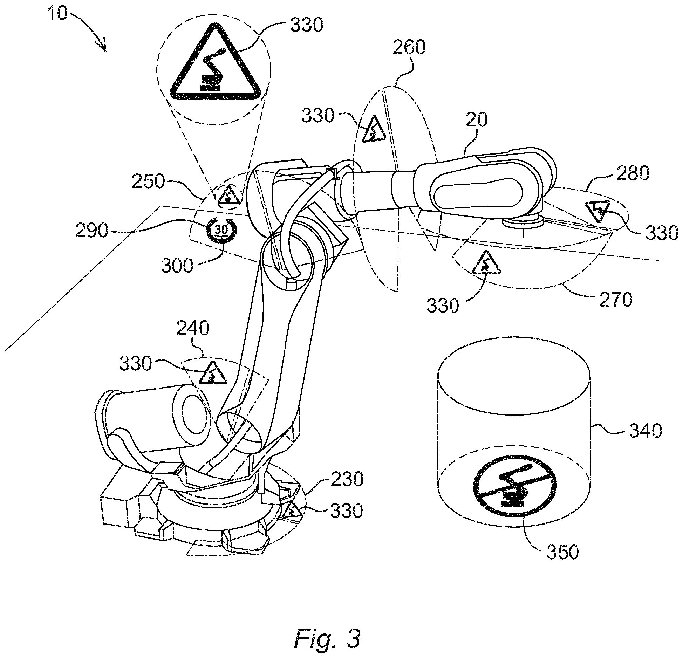

Referring to figure 3, a visualization 10 of a safety function 50 (see figure 4) present in an industrial robot 100 (see figure 4) comprises a robot image 20 and third, fourth, fifth, sixth, seventh and eighth geometric range images 230, 240, 250, 260, 270, 280 featuring circle sectors. In the present example respective third to eighth geometric ranges 320 (see figure 4) are angular intervals, and the third to eighth geometric range images 230, 240, 250, 260, 270, 280 have translucent green surfaces. At the fifth geometric range image 250 there is a fourth sign 290 which is a visible illustration of a safety function 50 "rotational speed limit" applicable within the second geometric range 160. The fourth sign 290 is a prohibitory one characterized by a circular shape with a white background and a red rim shaped as an arrow. In the present example the circle with the white background and the red rim shaped as an arrow communicates to the operator that the fifth geometric range 320 comprises a rotational speed limit for a robot axis i.e. the rotational speed of the forearm in relation to the upper arm is limited. The fourth sign 290 further comprises a second limit number 300 which is a visible illustration of a second boundary value 310 (see figure 4) defined by the operator for the respective safety function 50. In the present example the second boundary value 310 is 30 degrees/s.

At each of the third to eighth geometric range images 230, 240, 250, 260, 270, 280 there is a fifth sign 330 which is a visible illustration of a safety function 50 "work area" applicable within the third to eighth geometric ranges 320. The fifth sign 330 is a warning sign characterized by a triangular shape with a yellow background and a black perimeter. In the present example the triangles with yellow backgrounds and black perimeters provided with robot silhouettes communicate to the operator that the respective robot axes are allowed to turn within the respective third to eighth geometric ranges 320.

The visualization 10 of figure 3 further comprises a ninth geometric range image 340. In the present example a respective ninth geometric range 320 (see figure 4) is a cylinder, and the ninth geometric range image 340 has red edges and translucent red surfaces. At the ninth geometric range image 340 there is a sixth sign 350 which is a visible illustration of a safety function 50 "no entry" applicable within the ninth geometric range 320. The sixth sign 350 is a prohibitory one characterized by a circular shape with a white background and a red rim with a crossing red bar. In the present example the circle with the white background and the red rim with the crossing red bar communicates to the operator that no part of the robot 100 is allowed to enter the ninth geometric range 320.

As is schematically illustrated in figure 4, safety functions 50 as well as the respective geometric ranges 60, 160, 320 are defined in a computer program 400 running in a robot controller 410 controlling the movements of the robot 100. The computer program 400 is preferably created by utilizing a visual programming environment which also provides the visualizations 10 of the safety functions 50, the geometric ranges 60, 160, 320 within which (or outside of which) the safety functions 50 are applicable and the boundary values 90, 310 of the safety functions 50. The programmer thereby instantly sees the respective geometric range images 30, 130, 230, 240, 250, 260, 270, 280, signs 40, 80, 140, 290, 330, 350, limit numbers 70, 300, etc. as he or she produces a program. Preferably the geometric ranges 60, 160, 320, safety functions 50 and boundary values 90, 310 can be modified directly in the visual programming environment by modifying the respective visual illustrations of the same. In the case of the visualization 10 of figure 1 this implies e.g. that the first geometric range 60 corresponding to the first geometric range image 30 can be modified by dragging the corners of the first geometric range image 30 with help of a computer mouse pointer to thereby adapt the size of the cuboid, or that the first boundary value 90 to which the first limit number 70 corresponds can be modified by typing in a new limit number 70, 300 on the first sign 40.

It is to be understood that all the geometric ranges 60, 160, 320, safety functions 50 and boundary values 90, 310 illustrated in figures 1, 2 and 3 can equally well be illustrated in one and the same visualization 10. The different geometric range images 30, 130, 230, 240, 250, 260, 270, 280 can be distinguished from each other by providing each of them with a visible characteristic different from any visible characteristic of the remaining geometric range images 30, 130, 230, 240, 250, 260, 270, 280. Suitable visible characteristics are different patterns and different colors. Moreover, the safety functions 50 may be changed in dependence of a status of the robot 100 defined by the robot controller 410 on the basis of input signals received from external sensor. Any input signal communicating with the robot controller 410 shall be considered to influence the status of the robot 100. Also the visible characteristics can be changed in dependence of the status of the robot 100 in order to make also the status of the robot 100 visible to the operator. For example, a safety function 50 "creeping speed" may become active within a restricted volume when an input signal from a proximity sensor communicates to the robot controller 410 that a person enters the restricted volume. A geometric range image 30, 130, 230, 240, 250, 260, 270, 280 corresponding to the restricted volume may then start to twinkle e.g. by changing color every half a second. In the present example the twinkling geometric range image 30, 130, 230, 240, 250, 260, 270, 280 communicates to the operator that the safety function 50 within the restricted volume is activated because of a person within.

It is to be understood that a geometric range 60, 160, 320 within which a safety function 50 is to be applied can be defined either by defining the geometric range 60, 160, 320 and defining that the safety function 50 applies within that geometric range, or by defining the geometric range 60, 160, 320 and defining that the safety function 50 is excluded within that geometric range 60, 160, 320 and applies outside of the geometric range 60, 160, 320. For example, if one takes a volume and defines that the robot tool 110 shall stay within the volume, or if one takes an inverse of the same volume and defines that the robot tool 110 shall not enter the inverse of the volume, the end result is the same. Correspondingly, a safety function 50 and its inverse function in an analogous way. It is up to the operator to decide if he or she prefers to define a certain geometric range 60, 160, 320 or its inverse, if he or she prefers to define a certain safety function 50 or its inverse. In the case of figure 2, for example, it is more convenient to illustrate the cone within which the laser is allowed than illustrating the inverse of the cone where the laser is not allowed. The respective safety function 50 is therefore "laser allowed" and not "laser forbidden". Consequently, in the context of the present disclosure a geometric range 60, 160, 320 shall be considered to mean not only a certain geometric range 60, 160, 320 but also the inverse of the same. Particularly, in the context of the present disclosure a volume shall be considered to mean not only a certain volume but also a maximal work area of a robot 100 reduced by that volume.

In practice, when safety functions 50 are defined and monitored not the whole robot 100 but individual points associated to the robot 100 are considered. For example, for monitoring the position or speed of a robot tool 110 only the position or speed of a tool center point (TCP) may be considered. The robot manufacturer may predefine a number of individual points of a robot 100 that are often of interest when defining safety functions 50 in order to facilitate for the operator the definition of safety functions 50. For example, the TCP and a point at the elbow of a robot 100 are often of interest when monitoring whether the robot 100 keeps within certain volume. The robot manufacturer may furthermore predefine a number of useful safety functions 50, signs 40, 80, 140, 290, 330, 350 representing these safety functions 50 and geometric ranges 60, 160, 320 within which (or outside of which) the safety functions 50 are to be applied.

The invention is not limited to the embodiments shown above, but the person skilled in the art may modify them in a plurality of ways within the scope of the invention as defined by the claims. Thus, the invention is not e.g. limited to the types of geometric ranges 60, 160, 320 (volumes and angular intervals) defined in the examples given above, but any suitable geometric range 60, 160, 320 can be defined for restricting an applicability of a safety function 50.

## Claims

1. A method for visualizing safety functions (50) of an industrial robot (100), the method comprising the steps of:
- defining at least one geometric range (60, 160, 320);
- defining for each of the at least one geometric range (60, 160, 320) at least one safety function (50) applicable within the geometric range (60, 160, 320), wherein each said safety function is a user-configured definition affecting the functionality of the robot;
- visibly illustrating each of the at least one geometric range (60, 160, 320) to thereby provide at least one geometric range image (30, 130, 230, 240, 250, 260, 270, 280); **characterized in**
- visibly illustrating at each of the at least one geometric range image (30, 130, 230, 240, 250, 260, 270, 280) at least one safety function (50) applicable within the respective geometric range (60, 160, 320).

2. The method according to claim 1 wherein the geometric range (60, 160, 320) comprises at least one of the following: a line, a curve, an area, a surface, a volume, an angular interval.

3. The method according to any of the preceding claims, wherein the geometric range (60, 160, 320) is different from the maximal work area of the robot (100).

4. The method according to any of the preceding claims, wherein the at least one safety function (50) comprises one or more of the following: a boundary value (90, 310) of a parameter, an allowed or forbidden use of a robot tool, a speed limit to be enforced in a restricted volume when a proximity sensor detects a person therein.

5. The method according to claim 4, wherein the method further comprises the step of visibly illustrating the boundary value (90, 310).

6. The method according to any of claims 4 and 5, wherein the parameter is one of the following: axis position, axis speed, tool position, tool speed, rotational tool speed.

7. The method according to any of the preceding claims, wherein the method further comprises the step of providing the at least one geometric range image (30, 130, 230, 240, 250, 260, 270, 280) with at least one visible characteristic.

8. The method according to any of the preceding claims, wherein the method further comprises the steps of:
- defining a plurality of geometric ranges (60, 160, 320) ;
- visibly illustrating each of the plurality of geometric ranges (60, 160, 320) to thereby provide a plurality of geometric range images (30, 130, 230, 240, 250, 260, 270, 280); and
- providing each of the plurality of geometric range images (30, 130, 230, 240, 250, 260, 270, 280) with at least one visible characteristic different from the visible characteristics of the remaining geometric range images (30, 130, 230, 240, 250, 260, 270, 280).

9. The method according to any of claims 7 and 8, wherein the method further comprises the step of changing the at least one visible characteristic in dependence of a status of the robot (100).

10. The method according to any of claims 7 to 9, wherein the visible characteristic is a color.

11. A robot system comprising:
an industrial robot (100),
a robot controller (410) configured to control the movements of the robot (100),
a programming environment allowing an operator to define geometric ranges (60, 160, 320) and safety functions (50) applicable within the geometric ranges (60, 160, 320), wherein each said safety function is a user-configured definition affecting the functionality of the robot, and
a display,
the robot controller (410) comprising a computer program (400) configured to instruct the display to visibly illustrate each of the at least one geometric range (60, 160, 320) to thereby provide at least one geometric range image (30, 130, 230, 240, 250, 260, 270, 280), **characterized in that** the computer program (400) is further configured to instruct the display to visibly illustrate at each of the at least one geometric range image (30, 130, 230, 240, 250, 260, 270, 280) at least one safety function (50) applicable within the respective geometric range (60, 160, 320).

## Patentansprüche

1. Verfahren zum Visualisieren von Sicherheitsfunktionen (50) eines Industrieroboters (100), wobei das Verfahren die folgenden Schritte umfasst:
- Definieren mindestens eines geometrischen Bereichs (60, 160, 320);
- Definieren mindestens einer Sicherheitsfunktion (50) für jeden des mindestens einen geometrischen Bereichs (60, 160, 320), die in dem geometrischen Bereich (60, 160, 320) anwendbar ist, wobei jede Sicherheitsfunktion eine anwenderkonfigurierte Definition ist, die die Funktionalität des Roboters beeinflusst;
- Veranschaulichen auf sichtbare Weise jedes des mindestens einen geometrischen Bereichs (60, 160, 320), um dadurch mindestens ein Bild (30, 130, 230, 240, 250, 260, 270, 280) eines geometrischen Bereichs bereitzustellen;
**gekennzeichnet durch**
- Veranschaulichen auf sichtbare Weise mindestens einer Sicherheitsfunktion (50), die in dem jeweiligen geometrischen Bereich (60, 160, 320) anwendbar ist, auf jedem des mindestens einen Bildes (30, 130, 230, 240, 250, 260, 270, 280) eines geometrischen Bereichs.

2. Verfahren nach Anspruch 1, wobei der geometrische Bereich (60, 160, 320) mindestens ein Element der folgenden umfasst: eine Linie, eine Kurve, einen Bereich, eine Fläche, ein Volumen, einen Winkelbereich.

3. Verfahren nach einem der vorhergehenden Ansprüche, wobei sich der geometrische Bereich (60, 160, 320) vom maximalen Arbeitsbereich des Roboters (100) unterscheidet.

4. Verfahren nach einem der vorhergehenden Ansprüche, wobei die mindestens eine Sicherheitsfunktion (50) ein oder mehrere Elemente der Folgenden umfasst: einen Grenzwert (90, 310) eines Parameters, eine erlaubte oder verbotene Verwendung eines Roboterwerkzeugs, eine Geschwindigkeitsbegrenzung, die in einem begrenzten Volumen erzwungen werden muss, wenn ein Näherungssensor eine Person darin detektiert.

5. Verfahren nach Anspruch 4, wobei das Verfahren ferner den Schritt des Veranschaulichens des Grenzwertes (90, 310) auf sichtbare Weise umfasst.

6. Verfahren nach einem der Ansprüche 4 und 5, wobei der Parameter einer der folgenden ist: Achsenposition, Achsengeschwindigkeit, Werkzeugposition, Werkzeuggeschwindigkeit, Werkzeugdrehzahl.

7. Verfahren nach einem der vorhergehenden Ansprüche, wobei das Verfahren ferner den Schritt des Bereitstellens des mindestens einen Bildes (30, 130, 230, 240, 250, 260, 270, 280) eines geometrischen Bereichs mit mindestens einer sichtbaren Eigenschaft umfasst.

8. Verfahren nach einem der vorhergehenden Ansprüche, wobei das Verfahren ferner die folgenden Schritte umfasst:
- Definieren mehrerer geometrischer Bereiche (60, 160, 320) ;
- Veranschaulichen auf sichtbare Weise jedes der mehreren geometrischen Bereiche (60, 160, 320), um dadurch mehrere Bilder (30, 130, 230, 240, 250, 260, 270, 280) eines geometrischen Bereichs bereitzustellen; und
- Bereitstellen jedes der mehreren Bilder (30, 130, 230, 240, 250, 260, 270, 280) eines geometrischen Bereichs mit mindestens einer sichtbaren Eigenschaft, die sich von den sichtbaren Eigenschaften der restlichen Bilder (30, 130, 230, 240, 250, 260, 270, 280) eines geometrischen Bereichs unterscheidet.

9. Verfahren nach einem der Ansprüche 7 und 8, wobei das Verfahren ferner den Schritt des Änderns der mindestens einen sichtbaren Eigenschaft in Abhängigkeit von einem Zustand des Roboters (100) umfasst.

10. Verfahren nach einem der Ansprüche 7 bis 9, wobei die sichtbare Eigenschaft eine Farbe ist.

11. Robotersystem, das Folgendes umfasst:
einen Industrieroboter (100),
eine Robotersteuereinheit (410), die konfiguriert ist,
die Bewegungen des Roboters (100) zu steuern,
eine Programmierumgebung, die einer Bedienperson ermöglicht, geometrische Bereiche (60, 160, 320) und Sicherheitsfunktionen (50), die in den geometrischen Bereichen (60, 160, 320) anwendbar sind, zu definieren, wobei jede Sicherheitsfunktion eine anwenderkonfigurierte Definition ist, die die Funktionalität des Roboters beeinflusst, und
eine Anzeige,
wobei die Robotersteuereinheit (410) ein Computerprogramm (400) umfasst, das konfiguriert ist, die Anzeige anzuweisen, jeden der mindestens einen geometrischen Bereiche (60, 160, 320) auf sichtbare Weise zu veranschaulichen, um dadurch mindestens ein Bild (30, 130, 230, 240, 250, 260, 270, 280) eines geometrischen Bereichs bereitzustellen,
**dadurch gekennzeichnet, dass** das Computerprogramm (400) ferner konfiguriert ist, die Anzeige anzuweisen, auf jedem des mindestens einen Bildes (30, 130, 230, 240, 250, 260, 270, 280) eines geometrischen Bereichs mindestens eine Sicherheitsfunktion (50), die in dem jeweiligen geometrischen Bereich (60, 160, 320) anwendbar ist, auf sichtbare Weise zu veranschaulichen.

## Revendications

1. Procédé de visualisation de fonctions de sécurité (50) d'un robot industriel (100), le procédé comprenant les étapes suivantes :
- la définition d'au moins une plage géométrique (60, 160, 320) ;
- la définition pour chacune de l'au moins une plage géométrique (60, 160, 320) d'au moins une fonction de sécurité (50) applicable en-deçà de la plage géométrique (60, 160, 320), chaque dite fonction de sécurité étant une définition configurée par l'utilisateur affectant la fonctionnalité du robot ;
- l'illustration visible de chacune de l'au moins une plage géométrique (60, 160, 320) pour ainsi fournir au moins une image de plage géométrique (30, 130, 230, 240, 250, 260, 270, 280) ; **caractérisé par**
- l'illustration visible au niveau de chacune de l'au moins une image de plage géométrique (30, 130, 230, 240, 250, 260, 270, 280) d'au moins une fonction de sécurité (50) applicable en-deçà de la plage géométrique respective (60, 160, 320).

2. Procédé selon la revendication 1, dans lequel la plage géométrique (60, 160, 320) comprend au moins : une droite, une courbe, une zone, une surface, un volume et/ou un intervalle angulaire.

3. Procédé selon l'une quelconque des revendications précédentes, dans lequel la plage géométrique (60, 160, 320) est différente de la zone de travail maximal du robot (100).

4. Procédé selon l'une quelconque des revendications précédentes, dans lequel l'au moins une fonction de sécurité (50) comprend une ou plusieurs des fonctions suivantes : une valeur de délimitation (90, 310) d'un paramètre, une utilisation autorisée ou interdite d'un outil de robot, une limite de vitesse à respecter dans un volume restreint quand un détecteur de proximité détecte une personne dans ce volume.

5. Procédé selon la revendication 4, le procédé comprenant en outre l'étape d'illustration visible de la valeur de délimitation (90, 310) .

6. Procédé selon l'une quelconque des revendications 4 et 5, dans lequel le paramètre est un des paramètres : position d'axe, vitesse d'axe, position d'outil, vitesse d'outil, vitesse d'outil rotatif.

7. Procédé selon l'une quelconque des revendications précédentes, le procédé comprenant en outre l'étape de fourniture de l'au moins une image de plage géométrique (30, 130, 230, 240, 250, 260, 270, 280) avec au moins une caractéristique visible.

8. Procédé selon l'une quelconque des revendications précédentes, le procédé comprenant en outre les étapes suivantes :
- la définition d'une pluralité de plages géométriques (60, 160, 320) ;
- l'illustration visible de chaque plage de la pluralité de plages géométriques (60, 160, 320) pour ainsi fournir une pluralité d'images de plages géométriques (30, 130, 230, 240, 250, 260, 270, 280) ; et
- la fourniture de chaque image de la pluralité d'images de plages géométriques (30, 130, 230, 240, 250, 260, 270, 280) avec au moins une caractéristique visible différente des caractéristiques visibles des images de plages géométriques restantes (30, 130, 230, 240, 250, 260, 270, 280).

9. Procédé selon l'une quelconque des revendications 7 et 8, le procédé comprenant en outre l'étape de modification de l'au moins une caractéristique visible en fonction d'un état du robot (100).

10. Procédé selon l'une quelconque des revendications 7 à 9, dans lequel la caractéristique visible est une couleur.

11. Système de robot comprenant :
un robot industriel (100),
une unité de commande de robot (410) configurée pour commander les mouvements du robot (100),
un environnement de programmation permettant à un opérateur de définir des plages géométriques (60, 160, 320) et des fonctions de sécurité (50) applicables en-deçà des plages géométriques (60, 160, 320), dans lequel chaque dite fonction de sécurité est une définition configurée par l'utilisateur affectant la fonctionnalité du robot, et
un afficheur,
l'unité de commande de robot (410) comprenant un programme informatique (400) configuré pour ordonner à l'afficheur d'illustrer visiblement chacune de l'au moins une plage géométrique (60, 160, 320) pour ainsi fournir au moins une image de plage géométrique (30, 130, 230, 240, 250, 260, 270, 280), **caractérisé en ce que** le programme informatique (400) est configuré en outre pour ordonner à l'afficheur d'illustrer visiblement au niveau de chaque image de l'au moins une image de plage géométrique (30, 130, 230, 240, 250, 260, 270, 280) au moins une fonction de sécurité (50) applicable en-deçà de la plage géométrique respective (60, 160, 320).
